# FASCICULE DE BREVET EUROPEEN

(11) **EP 2 441 586 B1**
(45) Date de publication et mention de la délivrance du brevet: **07.12.2016**
(21) Numéro de dépôt: 11184907.1
(22) Date de dépôt: 12.10.2011
(51) Int. Cl.: D06P 7/00, G06T 3/00, B41M 5/00, G09F 15/00

(54) **Procédé de fabrication d'une toile imprimée destinée à être mise en volume tendue entre deux ossatures**
Herstellungsverfahren eines bedruckten Blechs, das dazu bestimmt ist, zwischen zwei Rahmenkonstruktionen ausgespannt zu werden
Method for manufacturing a printed fabric intended for being assembled taut between two frames

(30) Priorité: 12.10.2010 FR 1004018
(43) Date de publication de la demande: 18.04.2012
(73) Titulaire: Normalu, 68680 Kembs (FR)
(72) Inventeur: Scherrer, Jean-Marc, 68400 Riedisheim (FR)
(74) Mandataire: IP Trust

(56) Documents cités:
- EP-A1- 0 495 285
- EP-A1- 2 182 487
- US-A1- 2007 083 383

## Description

### Domaine technique

La présente invention concerne un procédé de fabrication d'une nappe souple imprimée destinée à être mise en volume pour avoir une forme globalement cylindrique et à être tendue entre deux ossatures fermées disposées à chacune des extrémités libres de ladite nappe souple.

### Technique antérieure

Il est très répandu de tendre une nappe souple imprimée de forme globalement cylindrique, de plus ou moins grandes dimensions, entre deux ossatures fermées disposées à chacune des extrémités de ladite nappe souple pour former un volume faisant office de support publicitaire par exemple. Ce type de nappe souple est obtenu, selon ses dimensions, à partir d'un ou plusieurs lés assemblés les uns aux autres, le cas échéant, pour constituer ladite nappe souple. En outre, ladite nappe souple est imprimée et pour ce faire, il est possible d'imprimer la nappe souple après assemblage des lés ou d'imprimer les lés individuellement avant leur assemblage. Ensuite, la nappe souple imprimée est assemblée pour former un cylindre et est tendue par ses extrémités entre deux ossatures. On sait que pour obtenir une tension uniforme de la nappe souple il est nécessaire que les dimensions de la nappe souple soient inférieures à celle des ossatures et que notamment la longueur du tube soit inférieure classiquement d'environ 7% par rapport à la distance entre les deux ossatures, si la nappe est réalisé en matière plastique telle que du PVC. Compte tenu de la tension de la nappe souple imprimée et de l'élasticité de la matière utilisée pour réaliser ladite nappe souple, la génératrice dudit cylindre n'est pas une droite rectiligne mais a plutôt une forme d'hyperbole. Par conséquent, l'image imprimée sur la nappe souple est déformée rendant l'image soit inesthétique quand il s'agit de dessins ou motifs décoratifs soit difficilement lisible quand il s'agit de texte.

Le document EP 2 182 487 A1 décrit un procédé comprenant une étape consistant à distordre une image à imprimer sur un film rétractable pour l'emballage d'un objet avant l'impression, afin que l'image imprimée retrouve sensiblement sa forme originale lorsque la partie du film comportant l'image est rétrécie sur une partie prédéterminée de l'objet.

### Exposé de l'invention

La présente invention vise à remédier à cet inconvénient en proposant un procédé de fabrication d'une nappe souple imprimée de forme globalement cylindrique destinée à être tendue entre deux ossatures fermées disposées à chacune de ses extrémités permettant d'obtenir simplement et de manière fiable, une nappe souple comportant une image reconstituée imprimée non déformée et proche de l'image d'origine.

A cet égard, l'invention concerne un procédé de fabrication d'une nappe souple comportant une toile imprimée et destinée à être mise en volume pour avoir une forme globalement cylindrique et à être tendue entre deux ossatures fermées disposées à chacune des extrémités libres de ladite nappe souple. Ledit procédé de fabrication comporte au moins une étape d'impression au cours de laquelle on imprime sur l'une des faces d'une feuille au moins une première portion d'une image d'origine ainsi que le contour d'au moins un premier lé correspondant à ladite première portion ; une étape de découpage dudit premier lé selon ledit contour imprimé sur la feuille ; une étape d'ajustement dudit premier lé imprimé pour ajuster le positionnement entre au moins les deux bords longitudinaux dudit premier lés l'un par rapport à l'autre de manière à limiter le décalage entre les bords longitudinaux de ladite première portion ; une étape d'assemblage dudit premier lé imprimé, sur au moins une zone d'assemblage, de manière à constituer ladite toile de la nappe souple de forme globalement cylindrique.

Le procédé de fabrication selon l'invention est remarquable en ce qu'avant l'étape d'impression, il comporte au moins une étape de déformation d'au moins ladite première portion de l'image d'origine, de manière à ce qu'après la mise sous tension de la nappe souple entre les deux ossatures, la toile imprimée restitue une image proche de l'image d'origine.

Le procédé de fabrication selon l'invention permet donc d'obtenir une image sur la nappe souple tendue proche de l'image d'origine et de garantir l'effet recherché par les dessins, motifs ou textes imprimés sur la toile de ladite nappe souple.

De manière avantageuse, l'étape de déformation d'au moins ladite première portion de l'image d'origine consiste en un rétrécissement de la première portion par rapport à son centre

De manière préférentielle, lors de l'étape d'impression, le contour imprimé d'au moins le premier lé est tel que ledit premier lé comporte deux zones neutres disposées de part et d'autre de ses bords longitudinaux.

De même, lors de l'étape d'ajustement, on utilise lesdites zones neutres d'au moins le premier lé que l'on superpose en alignant leurs bords longitudinaux et les motifs d'au moins ladite première portion.

Après l'étape d'assemblage, on procède avantageusement à une étape de coupe et de retrait d'au moins une partie du surplus au moins du premier lé située au-delà de la ligne d'assemblage et composée desdites zones neutres.

De manière avantageuse, avant l'étape d'ajustement, le procédé de fabrication selon l'invention comporte une étape de repérage au cours de laquelle on ménage, sur au moins la face de la feuille recevant au moins ladite première portion, dans chaque zone de repérage au moins un premier repère ayant une position prédéterminée respectivement par rapport à ladite première portion de l'image d'origine.

De manière préférentielle, lors de ladite étape d'ajustement, on superpose au moins lesdits premiers repères.

Selon une variante de réalisation, au cours de étape d'impression on imprime sur l'une des faces d'une feuille une première portion d'une image d'origine ainsi que le contour d'un premier lé correspondant à ladite première portion et au moins une seconde portion de ladite image d'origine ainsi que le contour d'au moins un second lé correspondant à ladite seconde portion.

Enfin, selon cette même variante de réalisation, avant l'étape de déformation, le procédé de fabrication comporte une étape additionnelle de découpage de l'image d'origine en une première portion et au moins une seconde portion.

### Description sommaire des figures

D'autres avantages et caractéristiques ressortiront mieux de la description de l'invention qui va suivre en référence aux figures annexées sur lesquelles :
- la figure 1 est une vue en perspective d'une nappe souple imprimée réalisée selon un procédé de fabrication conforme à l'invention et tendue entre deux ossatures ;
- la figure 2 est une vue de face de l'image d'origine que l'on souhaite imprimer sur la nappe souple de la figure 1 ;
- la figure 3 est une vue de face d'une des portions de l'image d'origine de la figure 2 qui sera imprimée sur l'un des lés utilisés pour fabriquer la nappe souple imprimée de la figure 1, avant les étapes de déformation, d'impression et d'assemblage du procédé selon l'invention ;
- la figure 4 est une vue de face d'une des portions de l'image d'origine de la figure 2 qui sera imprimée sur l'un des lés utilisés pour fabriquer la nappe souple imprimée de la figure 1, après l'étape de déformation et avant les étapes d'impression et d'assemblage du procédé selon l'invention ;
- la figure 5 est une vue de face d'une bande de toile souple sur laquelle sont dessinés les contours des lés utilisés pour fabriquer la nappe souple imprimée de la figure 1, après les étapes déformation et d'impression et avant l'étape d'assemblage du procédé selon l'invention ;
- la figure 6 est une vue de face d'un lé utilisé pour fabriquer la nappe souple imprimée de la figure 1, après l'étape de déformation et d'impression et avant les étapes d'assemblage par le procédé selon l'invention.

### Meilleure manière de réaliser l'invention technique

On décrira dans cette variante d'exécution préférentielle non limitative, un procédé de fabrication d'une nappe souple imprimée destinée à être mise en volume pour avoir une forme globalement cylindrique et à être tendue entre deux ossatures fermées, identiques et de forme circulaire disposées à chacune des extrémités de ladite nappe souple; toutefois, la nappes souple peut évidemment être utilisée suivant un axe horizontal et les ossatures peuvent évidemment avoir une toute autre forme qu'un cercle, ainsi elles peuvent, par exemple, être de forme polygonale ou encore elliptique, mais elles peuvent également être de forme différentes. De même, dans la description qui suit, la nappe souple est réalisée à partir de deux lés. Toutefois, on comprend que le nombre de lés est au moins égal à un, peut être différent de deux et dépend évidemment des dimensions de la nappe souple.

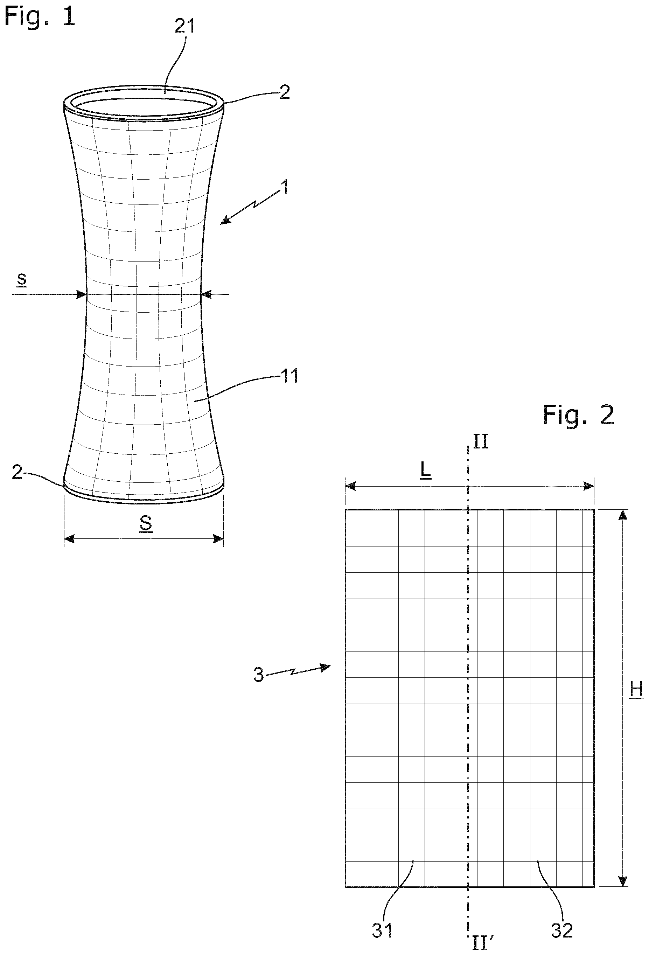

En référence à la figure 1, la nappe souple 1 imprimée fabriquée selon le procédé de fabrication conforme à l'invention est tendue entre deux ossatures 2 disposées à chacune de ses extrémités. Lesdites ossatures 2 sont fermées, identiques et de forme circulaire et sont classiquement constituées d'une lisse 21 elle-même constituée de profilés aboutés qui sont de préférence des profilés extrudés réalisés en alliage léger tel que par exemple un alliage d'aluminium. En outre, lesdites ossatures sont disposées l'une au-dessus de l'autre et sont de préférence coaxiales.

La nappe souple 1 comprend de manière classique une toile 11 avantageusement extensible et un moyen d'accrochage (non représenté) fixé à la périphérie de ladite toile 11. Ledit moyen d'accrochage périphérique est, par exemple, un harpon présentant une forme de crochet apte à coopérer avec la lisse 21 des ossatures 2 pour maintenir ladite nappe souple 1 tendue par ses extrémités entre les deux ossatures.

Par ailleurs, pour obtenir un volume comme celui représenté sur la figure 1, la nappe souple 1 a globalement une forme cylindrique et comporte un moyen d'accrochage le long de la périphérie de chacune de ses extrémités libres, chaque moyen d'accrochage étant apte à coopérer avec l'une des deux ossatures 2 pour maintenir tendue ladite nappe souple 1. Les moyens d'accrochages sont fixés sur la toile 11 de la nappe souple 1, après la mise en forme cylindrique de ladite toile 11, par soudage, collage ou encore couture, par exemple.

En référence à la figure 1, compte tenu de la tension et de la matière de la toile 11 de ladite nappe souple 1, le volume obtenu par les ossatures 2 et la nappe souple 1 tendue a globalement une forme d'hyperboloïde de révolution présentant une section S à chaque extrémité de la nappe souple 1 située au droit de chaque ossature 2 et une section s au milieu de ladite nappe souple 1 située entre lesdites ossatures 2, la section s étant inférieure à la section S. L'Homme du Métier n'aura aucune difficulté à déterminer les dimensions de la section s en connaissant notamment les dimensions de la section S, la tension de la nappe souple 1 et la matière de la toile 11.

Toutefois, avant d'entamer la fabrication de la nappe souple 1, on choisit au préalable une image d'origine 3, représentée sur la figure 2, que l'on souhaite imprimer sur cette nappe souple 1. L'image d'origine 3 peut être de nature diverse et peut par exemple comporter un décor ou des motifs et/ou des écritures. Dans l'exemple représenté sur les figures 2 à 6, l'image d'origine 3 représente un quadrillage formé par des traits en noir sur un fond blanc. L'image d'origine 3 peut bien entendu être en couleurs ou en nuance de gris et ne comporter que des décors ou motifs sur seulement une partie de sa surface, lesdits décors ou motifs ne recouvrant alors que partiellement la toile 11 de la nappe souple 1.

Dans la variante d'exécution préférentielle décrite, l'image d'origine 3 est contenue dans un rectangle dont la largeur L est au plus égale au périmètre de la section S de la nappe souple 1 située au droit de chacune des ossatures 2 et la hauteur H au plus égale à la distance comprise entre les deux ossatures 2 aux dimensions des moyens d'accrochage et à la position de la zone d'accrochage sur les lisses 21 près.

Classiquement, pour obtenir une tension adéquate de la nappe souple 1, si cette dernière est réalisée en matière plastique telle que du PVC, on choisit la hauteur H avec une réduction de 7% par rapport à la distance entre les deux ossatures 2.

Ensuite, l'étape de découpage de l'image d'origine 3 consiste en un découpage de l'image d'origine 3 en N portions dans le sens de la hauteur H suivant l'axe II-II' de la figure 2, dont une première et une seconde portions 31, 32 de préférence de dimensions égales. Chacune des première et seconde portions 31, 32 sera imprimée sur l'un des lés constituant de la toile 11. Le nombre N correspond au nombre de lés constituant la toile 11 de la nappe souple 1, il est donc ici égal à deux, car dans l'exemple décrit il ya deux lés.

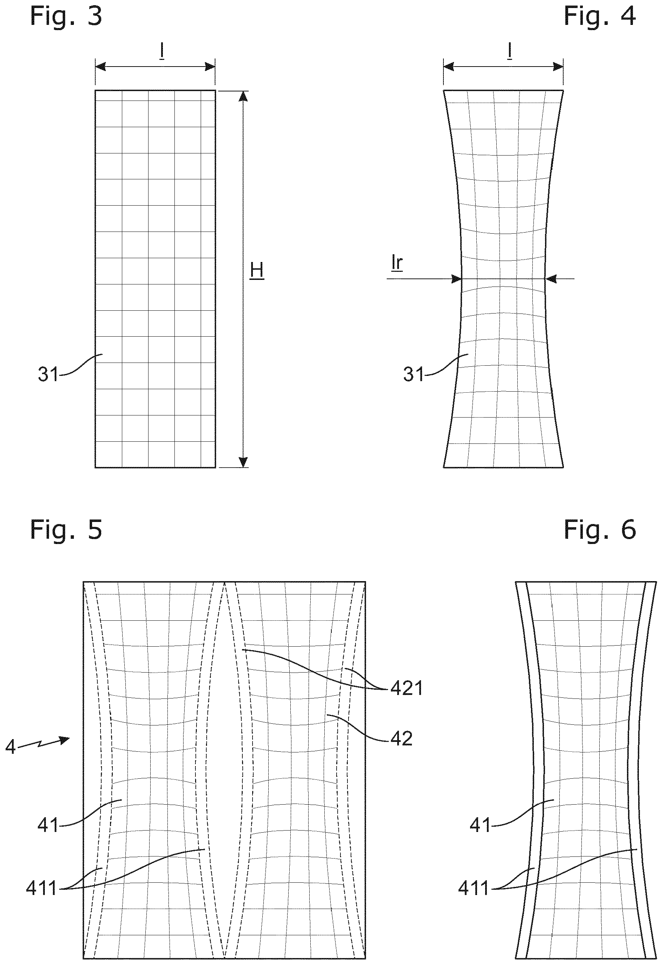

On obtient alors la première portion 31 de l'image d'origine 3 telle que représentée sur la figure 3. Cette première portion 31 a alors les dimensions suivantes: hauteur H et largeur l égale à la largeur de l'image d'origine 3 divisée par le nombre N de divisions.

On comprend bien que cette étape de découpage de l'image d'origine 3 n'est nécessaire que si la toile 11 de la nappe souple 1 est constituée de plusieurs lés.

On comprend bien que lorsque que l'on va mettre sous tension la nappe souple 1, l'image imprimée sur la dite nappe souple 1 va s'agrandir. Pour compenser la déformation de l'image imprimée sur la toile 11 lors de la mise sous tension de la nappe souple 1, la première portion 31 de l'image d'origine 3, qui sera imprimée sur un des lés constituant la toile 11, va être déformée.

En référence à la figure 4, le procédé de fabrication comprend en outre une étape de déformation de la portion 31 de l'image d'origine 3 qui consiste en un rétrécissement de ladite première portion 31 de l'image d'origine 3 par rapport au centre de la première portion 31 de l'image d'origine 3, ledit centre correspondant sensiblement à l'intersection des diagonales de ladite première portion 31 avant déformation. On obtient ainsi une première portion 31 rétrécie présentant une largeur lr au droit du milieu de la hauteur H. Cette largeur lr correspond à la longueur du périmètre de la section s médiane de la nappe souple 1 disposée entre lesdites ossatures 2 divisée par le nombre N de portions 31, 32. Par ailleurs, la seconde portion 32 de l'image d'origine 3 est déformée de la même façon.

Les étapes de découpage de l'image d'origine 3 et de déformation des première et seconde portions 31, 32 de l'image d'origine 3 sont de préférence réalisées à l'aide d'un ordinateur et d'un logiciel de retouche d'image.

Ensuite, en référence à la figure 5, pour former la toile 11 de la nappe souple 1, on part d'une feuille 4 extensible de préférence réalisée en matériau thermo-fusible, par exemple en PVC, sur laquelle on imprimera et découpera ultérieurement des premier et second lés 41, 42, dont au moins un premier lé 41 qui est tel que représenté sur la figure 6.

Au cours de l'étape d'impression illustrée par la figure 5, on imprime sur l'une des faces de ladite feuille 4 les première et seconde portions 31, 32 de l'image d'origine 3 ainsi que le contour des premier et second lés 41, 42 correspondants auxdites première et seconde portions 31, 32. La forme des premier et second lés 41, 42 est par conséquent respectivement semblable à celle desdites première et seconde portions 31, 32. On utilisera pour l'étape d'impression la technique de la sérigraphie ou toute autre technique adaptée.

Le procédé de fabrications selon l'invention comporte ensuite une étape de découpage de la feuille 4 pour obtenir les premier et second lés 41, 42 tels que celui représenté sur la figure 6. Pour ce faire, on découpe lesdits premier et second lés 41, 42 selon les contours imprimés sur la feuille 4 à l'aide d'un outil coupant et/ou chauffant ou toute autre technique adaptée.

En outre, en référence aux figures 5 et 6, les contours imprimés sont de préférence tels que les premier et second lés 41, 42 comportent chacun deux zones neutres 411, 421 disposées de part et d'autre des bords longitudinaux desdits premier et second lés 41, 42 et ne comportant avantageusement aucun décor ou motif. Lesdites zones neutres 411, 421 permettent l'ajustement et surtout l'assemblage des premier et second lés 41, 42 entre eux.

Ainsi au cours de l'étape d'ajustement, on superpose par exemple les premier et second lés 41, 42 préalablement imprimés de sorte que les première et seconde portions 31, 32 de l'image d'origine 3 respectivement imprimées sur les premier et second lés 41, 42 soient face à face. On ajuste ensuite la position des premier et second lés 41, 42 l'un par rapport à l'autre en utilisant leurs zones neutres 411, 421 respectives que l'on superpose en alignant leurs bords longitudinaux et les motifs desdites première et seconde portions 31, 32 le plus précisément possible.

Ensuite, on réalise l'étape d'assemblage au cours de laquelle on solidarise le premier lé 41 au second lé 42 sur au moins une zone d'assemblage afin d'obtenir la toile 11 de la nappe souple 1. Dans l'exemple illustré, les premier et second lés 41, 42 sont réalisés à partir d'une feuille 4 en matériau thermo-fusible, ils peuvent donc fusionner l'un à l'autre lorsqu'ils sont soumis à une température au moins égale à leur température de fusion. La zone d'assemblage, dans cet exemple une ligne d'assemblage, est prévue sensiblement confondue aux bords longitudinaux des première et seconde portions 31, 32 de l'image d'origine 3 respectivement imprimées sur les premier et second lés 41, 42. Cette ligne d'assemblage est par exemple obtenue au moyen d'une molette chauffante (non représentée) déplacée sur le complexe, voire de deux molettes chauffantes disposées de part et d'autre du complexe. La ligne d'assemblage 3 peut également être obtenue par un outil chauffant rectiligne appliqué sur le complexe ou par tout autre équipement adapté.

Après cette étape d'assemblage, on procède de préférence à une étape de coupe et de retrait d'au moins une partie du surplus des premier et second lés 41, 42 située au-delà de la ligne d'assemblage 3 par rapport aux première et seconde portions 31, 32 de l'image d'origine 3 et essentiellement composée desdites zones neutres 411, 421 des premier et second lés 41, 42. Pour ce faire, on utilise par exemple un outil coupant. On peut également se servir de la fusion des premier et second lés 1, 2 pour les couper au niveau de la ligne d'assemblage et simultanément retirer le surplus. Cette étape de coupe est bien entendu optionnelle. Comme on vient de le voir, l'étape de coupe peut donc être réalisée simultanément à l'assemblage ou successivement.

On réalise les étapes d'ajustement, d'assemblage et, le cas échéant, de coupe et de retrait précédemment décrites pour assembler tous les premier et second lés 41, 42 entre eux et ensuite pour constituer la toile 11 de la nappe souple 1 imprimée de forme globalement cylindrique.

On comprend bien que les étapes d'ajustement, d'assemblage et, le cas échéant, de coupe et de retrait précédemment décrites sont nécessaires même si la toile 71 de la nappe souple 1 n'est constituée uniquement que du premier lé 41, car ledit premier lé 41 doit au moins être ajusté et assemblé pour donner à ladite toile 71 sa forme globalement cylindrique. En effet pour obtenir ladite forme, le premier lé 41 doit être replié sur lui-même, la portion 31 imprimée restant visible, et ses bords longitudinaux doivent être ajustés puis assemblés l'un par rapport à l'autre en utilisant ses zones neutres 411.

Enfin, un moyen d'accrochage est fixé par soudage, collage ou encore couture, par exemple, sur chacune des extrémités libre de la toile 11 de la nappe souple 1 pour permettre la mise en tension de ladite nappe souple 1 entre les deux ossatures 2.

On comprend bien que les première et seconde portions 31, 32 de l'image d'origine 3 respectivement imprimées sur chacun des premier et second lés 41, 42 restituent, après la mise sous tension de la nappe souple 1 entre les deux ossatures 2, une image proche de l'image d'origine 3 compte tenu de leur déformation préalable à l'impression sur les premier et second lés 41, 42.

En référence à l'exemple décrit, la nappe obtenue selon le procédé de fabrication de l'invention est constituée de deux lés. Elle peut bien entendu ne comporter qu'un seul lé ou bien encore un nombre supérieur de lés. Lorsqu'ils sont imprimés, on utilisera avantageusement le même procédé pour imprimer et assembler les lés supplémentaires.

### Description d'autres modes de réalisation

Dans une autre variante de réalisation non représentée sur les figures, le procédé de fabrication selon l'invention comporte une étape de repérage avant l'étape d'ajustement.

Pour cette étape de repérage, les zones neutres 411, 421 font également office de zones de repérage utilisées ultérieurement pour positionner les premier et second lés 41, 42 les uns par rapport au autres lors de l'étape d'assemblage afin de positionner plus facilement les premier et second lés 41, 42 entre eux et de ne pas avoir un décalage des première et seconde portions 31, 32 de l'image d'origine 3.

Au cours de l'étape de repérage, on imprime également, sur la face des premier et second lés 41, 42 dans chaque zone de repérage 411, 421 au moins un premier repère et un second repère ayant chacun une position prédéterminée respectivement par rapport à la première et seconde portions 31, 32 de l'image d'origine 3. Dans cet exemple, on imprime deux premiers repères et deux seconds repères formés, par exemple, par des traits droits prévus globalement perpendiculaires au bord correspondant de chacun des premier et second lés 41, 42.

L'impression des premiers repères est de préférence réalisée de manière simultanée à l'impression de la première portion 31 de l'image d'origine 3 sur le premier lé 41. De même, l'impression des seconds repères est de préférence réalisée de manière simultanée à l'impression de la seconde portion 32 de l'image d'origine 3 sur le second lé 42. On garantit ainsi respectivement la précision de positionnement des premiers et seconds repères par rapport respectivement à la première et à la seconde portions 31, 32 de l'image d'origine 3.

Au cours de l'étape d'ajustement, on superpose les premier et second lés 41, 42 préalablement imprimés de sorte que les première et seconde portions 31, 32 de l'image d'origine 3 que chacun porte, se font face. On ajuste ensuite la position des premier et second lès 41, 42 l'un par rapport à l'autre en utilisant les premiers et second repères que l'on superpose le plus précisément possible. Pour ce faire, on ouvre le complexe formé par les premier et second lés 41, 42 au niveau de leurs zones de repérage 411, 421 afin de positionner les premiers et second repères en regard les uns des autres.

Lorsque l'opacité et/ou la transparence du premier ou second lé 41, 42 placé au dessus de l'autre le permet, ce positionnement peut être réalisé sans ouvrir le complexe. Pour faciliter cette opération, le complexe peut être rétro éclairé. Bien entendu, on peut prévoir un ajustement différent, par exemple en positionnant les premier et second repères côte à côte.

On comprend bien si la toile 71 de la nappe souple 1 n'est constituée uniquement que du premier lé 41, l'étape d'ajustement avec les premiers repères est également avantageuse. En effet, on rappelle que pour obtenir ladite forme cylindrique de la toile 11, le premier lé 41 doit être replié sur lui-même, la portion 31 imprimée restant visible, de sorte que les zones neutres 411 faisant office de zones de repérage soient face à face. Ainsi, on ajuste ensuite la position des bords longitudinaux du premier lé 41 l'un par rapport à l'autre en utilisant les premiers repères de chaque zone de repérage 411 que l'on superpose le plus précisément possible.

Pour plus de détails concernant l'étape de repérage et l'étape d'ajustement associée, on se référera à la demande de brevet française FR 10/03206 déposée au nom de la Demanderesse concernant un procédé de fabrication de toile imprimée.

### Possibilité d'application industrielle

Le procédé de fabrication selon l'invention peut être mis en oeuvre pour fabriquer tout type de nappes souples imprimées comportant au moins un lé, destinée à être mise en volume pour avoir une forme globalement cylindrique et à être mise en tension entre deux ossatures. Le volume ainsi obtenu pourra faire office par exemple de décor, d'affichage ou encore de support publicitaire. De plus, il pourra faire office des volumes lumineux si on place des sources lumineuses à l'intérieur dudit volume et que la toile utilisée est translucide ou transparente.

Il est bien entendu que les exemples décrits ne sont que des illustrations particulières et en aucun cas limitatives des domaines d'application de l'invention.

## Revendications

1. Procédé de fabrication d'une nappe souple (1) comportant une toile (11) imprimée et destinée à être mise en volume pour avoir une forme globalement cylindrique et à être tendue entre deux ossatures (2) fermées disposées à chacune des extrémités libres de ladite nappe souple, ledit procédé de fabrication comportant au moins :
- une étape d'impression au cours de laquelle on imprime sur l'une des faces d'une feuille (4) au moins une première portion (31, 32) d'une image d'origine (3) ainsi que le contour d'au moins un premier lé (41, 42) correspondant à ladite première portion (31, 32),
- une étape de découpage dudit premier lé (41, 42) selon ledit contour imprimé sur la feuille (4),
- une étape d'ajustement dudit premier lé (41, 42) imprimé pour ajuster le positionnement entre au moins les deux bords longitudinaux dudit premier lé (41, 42) l'un par rapport à l'autre de manière à limiter le décalage entre les bords longitudinaux de ladite première portion (31, 32),
- une étape d'assemblage dudit premier lé (41, 42) imprimé, sur au moins une zone d'assemblage, de manière à constituer la toile (11) de la nappe souple (1) de forme globalement cylindrique,
ledit procédé de fabrication étant **caractérisé en ce qu'**avant l'étape d'impression, il comporte au moins une étape de déformation d'au moins ladite première portion (31, 32) de l'image d'origine (3), de manière à ce qu'après la mise sous tension de la nappe souple (1) entre les deux ossatures (2), la toile (11) imprimée restitue une image proche de l'image d'origine (3).

2. Procédé de fabrication selon la revendication précédente, **caractérisé en ce que** l'étape de déformation d'au moins ladite première portion (31, 32) de l'image d'origine (3) consiste en un rétrécissement de la première portion (31, 32) par rapport à son centre.

3. Procédé de fabrication selon l'une quelconque des revendications précédentes, **caractérisé en ce que** la zone d'assemblage est une ligne d'assemblage, prévue sensiblement confondue aux bords longitudinaux d'au moins la première portion (31, 32) de l'image d'origine (3).

4. Procédé de fabrication selon l'une quelconque des revendications précédentes, **caractérisé en ce que**, lors de l'étape d'impression, le contour imprimé d'au moins le premier lé (41, 42) est tel que ledit premier lé (41, 42) comporte deux zones de neutres (411, 421) disposées de part et d'autre de ses bords longitudinaux.

5. Procédé de fabrication selon la revendication précédente, **caractérisé en ce que**, lors de l'étape d'ajustement, on utilise les zones neutres (411, 421) d'au moins le premier lé (41, 42) que l'on superpose en alignant leurs bords longitudinaux et les motifs d'au moins ladite première portion (31, 32).

6. Procédé de fabrication selon l'une quelconque des revendications 4 ou 5, **caractérisé en ce qu'**après l'étape d'assemblage, on procède à une étape de coupe et de retrait d'au moins une partie du surplus au moins du premier lé (41, 42) située au-delà de la ligne d'assemblage et composée desdites zones neutres (411, 421).

7. Procédé de fabrication selon l'une quelconque des revendications précédentes, **caractérisé en ce qu'**avant l'étape d'ajustement, il comporte une étape de repérage au cours de laquelle on ménage, sur au moins la face de la feuille (4) recevant au moins ladite première portion (31, 32), dans chaque zone de repérage (411, 421) au moins un premier repère ayant une position prédéterminée respectivement par rapport à la première portion (31, 32) de l'image d'origine (3).

8. Procédé de fabrication selon la revendication précédente, **caractérisé en ce que**, lors de ladite étape d'ajustement, on superpose au moins lesdits premiers repères.

9. Procédé de fabrication selon l'une quelconque des revendications précédentes, **caractérisé en ce qu'**au cours de étape d'impression on imprime sur l'une des faces d'une feuille une première portion (31) d'une image d'origine (3) ainsi que le contour d'un premier lé (41) correspondant à ladite première portion (31) et au moins une seconde portion (32) de ladite image d'origine (3) ainsi que le contour d'au moins un second lé (42) correspondant à ladite seconde portion (31, 32).

10. Procédé de fabrication selon la revendication précédente, **caractérisé en ce qu'**avant l'étape de déformation, il comporte une étape additionnelle de découpage de l'image d'origine (3) en une première et au moins une seconde portions (31, 32).

## Patentansprüche

1. Verfahren zur Herstellung eines flexiblen Gewebes (1) welches einen bedruckten Stoff (11) enthält, und dazu bestimmt ist, zu einem generell zylindrischen Volumen geformt und zwischen zwei geschlossene Rahmen (2), die an jedem der freien Enden des flexiblen Gewebes angeordnet sind, gespannt zu werden, wobei besagtes Herstellungsverfahren mindestens Folgendes umfasst:
- eine Phase des Bedruckens, in der man auf eine der Flächen einer Folie (4) mindestens einen ersten Teil (31, 32) eines Originalbildes (3) sowie den Umriss mindestens einer ersten, dem besagten ersten Teil (31, 32) entsprechenden Bahn (41, 42) druckt;
- eine Phase des Ausschneidens besagter erster Bahn (41, 42) entlang dem Umriss, der auf die Folie (4) gedruckt wurde;
- eine Phase der Anpassung besagter erster bedruckter Bahn (41, 42), bei der die beiden Längskanten der ersten Bahn (41, 42) so zueinander positioniert werden, dass sich die Längskanten besagten ersten Teils (31, 32) möglichst nicht verschieben;
- eine Phase des Anbringens der ersten bedruckten Bahn (41, 42) auf mindestens einem Fügebereich, so dass der Stoff (11) des flexiblen Gewebes (1) generell zylinderförmig geformt wird,
wobei besagtes Herstellungsverfahren **dadurch gekennzeichnet ist, dass** vor der Phase des Bedruckens mindesten eine Phase der Formung mindestens besagten ersten Teils (31, 32) des Originalbildes (3) erfolgt, so dass der bedruckte Stoff (11), nachdem das flexible Gewebe (1) zwischen die beiden Rahmen (2) gespannt wurde, ein Bild zeigt, das dem Originalbild (3) gleicht.

2. Herstellungsverfahren nach dem vorhergehenden Anspruch, **dadurch gekennzeichnet, dass** die Phase der Formung mindestens des ersten Teils (31, 32) des Originalbilds (3) darin besteht, den ersten Teil (31, 32) in Bezug auf seine Mitte zu verengen.

3. Herstellungsverfahren nach dem vorhergehenden Anspruch, **dadurch gekennzeichnet, dass** der Fügebereich eine Verbindungslinie ist, die im Wesentlichen mit den Längskanten mindestens des ersten Teils (31, 32) des Originalbilds (3) zusammenfällt.

4. Herstellungsverfahren nach dem vorhergehenden Anspruch, **dadurch gekennzeichnet, dass** in der Druckphase der gedruckte Umriss mindestens der ersten Bahn (41, 42) dergestalt ist, dass besagte erste Bahn (41, 42) zwei neutrale Bereiche (411, 421) aufweist, die zu beiden Seiten der Längskanten angeordnet sind.

5. Herstellungsverfahren nach dem vorhergehenden Anspruch, **dadurch gekennzeichnet, dass** man in der Anpassungsphase die neutralen Bereiche (411, 421) mindestens der ersten Bahn (31, 42) durch Ausrichtung ihrer Längkanten und der Motive mindestens des ersten Teils (31, 35) übereinander lagert.

6. Herstellungsverfahren nach einem der Ansprüche 4 oder 5, **dadurch gekennzeichnet, dass** auf diese Fügephase eine Phase des Abschneidens und Entfernens eines Teils mindestens der ersten Bahn (41, 42) folgt, welcher über die aus besagten neutralen Bereichen (411, 421) bestehende Verbindungslinie hinausragt.

7. Herstellungsverfahren nach einem der vorhergehenden Ansprüche, **dadurch gekennzeichnet, dass** vor der Anpassungsphase eine Markierungsphase stattfindet, in der man mindestens auf der Fläche der Folie (4), auf welche mindestens besagter erster Teil (31, 32) aufgelegt wird, in jedem Markierungsbereich (411, 421) mindestens eine erste Markierung mit einer in Bezug auf den ersten Teil (31, 32) des Originalsbildes vorab festgelegten Position anbringt.

8. Herstellungsverfahren nach dem vorhergehenden Anspruch, **dadurch gekennzeichnet, dass** man in besagter Anpassungsphase mindestens die besagten ersten Markierungen übereinander legt.

9. Herstellungsverfahren nach einem der vorhergehenden Ansprüche, **dadurch gekennzeichnet, dass** man in der Phase des Bedruckens auf eine der Seiten einer Folie einen ersten Teil (31) eines Originalbildes (3) sowie den Umriss einer ersten, besagtem erstem Teil (31) entsprechenden Bahn (41) Bahn druckt, sowie mindestens einen zweiten Teil (32) besagten Originalbildes (3) sowie den Umriss von mindestens einer dem besagtem zweiten Teil (31, 32) entsprechenden zweiten Bahn (42).

10. Herstellungsverfahren nach dem vorhergehenden Anspruch, **dadurch gekennzeichnet, dass** vor der Formungsphase das Originalbild (3) in einen ersten und mindestens zweiten Teil (31, 32) zerschnitten wird.

## Claims

1. A method for manufacturing a flexible sheet (1) comprising a printed fabric (11) and intended to be set up to have a generally cylindrical shape and to be stretched between two closed frames (2) positioned at each one of the free ends of said flexible sheet, with said manufacturing method comprising at least:
- a step of printing, in the course of which at least a first portion (31, 32) of an original image (3) is printed on one of the faces of a sheet (4) as well as the outline of at least a first strip (41, 42) corresponding to said first portion (31, 32),
- a step of cutting said first strip (41, 42) according to said outline printed on the sheet (4),
- a step of adjusting said first printed strip (41, 42) to adjust the position between at least the two longitudinal edges of said first strip (41, 42) relative to each other so as to limit the shifting between the longitudinal edges of said first portion (31, 32),
- a step of assembling said first printed strip (41, 42) on at least one assembling zone, so as to form the fabric (11) of the flexible sheet (1) into a generally cylindrical shape,
with said manufacturing method being **characterized in that**, prior to the step of printing, it comprises at least a step of deforming at least said first portion (31, 32) of the original image (3), so that, after tensioning the flexible sheet (1) between the two frames (2), the printed fabric (11) renders an image very similar to the original image (3).

2. A manufacturing method according to the preceding claim, **characterized in that** the step of deforming at least said first portion (31, 32) of the original image (3) consists in narrowing the first portion (31, 32) relative to the center thereof.

3. A manufacturing method according to any one of the preceding claims, **characterized in that** the assembling zone is an assembly line, so provided as to be substantially coincident with the longitudinal edges of at least the first portion (31, 32) of the original image (3).

4. A manufacturing method according to any one of the preceding claims, **characterized in that**, during the step of printing, the printed outline of at least the first strip (41, 42) is such that said first strip (41, 42) comprises two neutral zones (411, 421) positioned on either side of the longitudinal edges thereof.

5. A manufacturing method according to the preceding claim, **characterized in that**, during the step of adjusting, the neutral zones (411, 421) of at least the first strip (41, 42) are used and are superimposed while aligning the longitudinal edges thereof and the patterns of at least said first portion (31, 32).

6. A manufacturing method according to any one of claims 4 or 5, **characterized in that** after the step of assembling, a step of cutting and removing at least a part of the surplus of at least the first strip (41, 42) located beyond the assembly line and consisting of said neutral zones (411, 421) is carried out.

7. A manufacturing method according to any one of the preceding claims, **characterized in that**, prior to the step of adjusting, it comprises a step of identification, in the course of which at least a first mark having a respective predetermined position relative to the first portion (31, 32) of the original image (3) is provided on at least the face of the sheet (4) receiving at least said first portion (31, 32), in each identification zone (411, 421).

8. A manufacturing method according to the preceding claim, **characterized in that**, in the course of said adjusting step, at least said first marks are superimposed.

9. A manufacturing method according to any one of the preceding claims, **characterized in that**, in the course of the printing step, a first portion (31) of an original image (3) is printed on one of the faces of a sheet, as well as the outline of a first strip (41) corresponding to said first portion (31) and at least a second portion (32) of said original image (3) is printed as well as the outline of at least a second strip (42) corresponding to said second portion (31, 32).

10. A manufacturing method according to the preceding claim, **characterized in that**, prior to the step of deforming, it comprises an additional step of cutting the original image (3) into a first and at least a second portion (31, 32).
